(19) Europäisches Patentamt
European Patent Office
Office européen des brevets

(11) **EP 1 162 571 B1**

(12) **EUROPEAN PATENT SPECIFICATION**

(45) Date of publication and mention
of the grant of the patent:
**21.04.2004 Bulletin 2004/17**

(51) Int Cl.⁷: **G06T 5/20**

(21) Application number: **00250182.3**

(22) Date of filing: **09.06.2000**

(54) **Method and apparatus for processing video pictures for false contour effect compensation**

Verfahren und Vorrichtung zur Videobildbearbeitung zur Kompensation des Falschkontureffekts

Procédé et appareil pour le traitement d'images vidéo pour la compensation de l'effet de faux contours

(84) Designated Contracting States:
**DE ES FR GB**

(43) Date of publication of application:
**12.12.2001 Bulletin 2001/50**

(73) Proprietor: **DEUTSCHE THOMSON-BRANDT GMBH**
**78048 Villingen-Schwenningen (DE)**

(72) Inventors:
• **Weitbruch, Sébastien**
**78087 Mönchweiler (DE)**
• **Zwing, Rainer**
**78052 VS-Schwenningen (DE)**
• **Correa, Carlos**
**78056 VS-Schwenningen (DE)**

(74) Representative:
**Schäferjohann, Volker Willi, Dipl.-Phys. et al**
**Deutsche Thomson-Brandt GmbH**
**European Patent Operations**
**Karl-Wiechert-Allee 74**
**30625 Hannover (DE)**

(56) References cited:
**EP-A- 0 973 147**          **EP-A- 0 987 675**

• **YAMAGUCHI T ET AL: "DEGRADATION OF MOVING-IMAGE QUALITY IN PDPS: DYNAMIC FALSE CONTOURS" JOURNAL OF THE SOCIETY FOR INFORMATION DISPLAY,US,SOCIETY FOR INFORMATION DISPLAY, SAN JOSE, vol. 4, no. 4, December 1996 (1996-12), pages 263-270, XP000825468 ISSN: 1071-0922**

**Description**

The invention relates to a method and apparatus for processing video pictures, especially for false contour effect compensation.

More specifically the invention is closely related to a kind of video processing for improving the picture quality of pictures which are displayed on matrix displays like plasma display panels (PDP), LCOS or display devices with digital micro mirror arrays (DMD).

Background

Although plasma display panels are known for many years, plasma displays are encountering a growing interest from TV manufacturers. Indeed, this technology now makes it possible to achieve flat colour panels of large sizes and with limited depth without any viewing angle constraints. The size of the displays may be much larger than the classical CRT picture tubes.

Referring to the latest generation of European TV sets, a lot of work has been done to improve its picture quality. Consequently, there is a strong demand that a TV set built in a new technology like the plasma display technology has to provide a picture as good or better than the old standard TV technology. On one hand the plasma display technology gives the possibility of nearly unlimited screen size with an attractive thickness, but on the other hand it generates new kinds of artefacts which could damage the picture quality.

Most of these artefacts are different from the known artefacts occuring on classical CRT colour picture tubes. Because the artefacts are different from the known one, they are more visible to the viewer because the viewer is not used to see them.

The invention deals with a specific new artefact which is called "dynamic false contour effect" as it corresponds to disturbances of gray levels and colours in the form of an apparition of coloured edges in the picuture when an observation point on the matrix screen moves.

The degradation is enhanced when the image has a smooth gradation like a skin. This effect leads to a serious degradation of the picture sharpness too. In addition, the same problem occurs on static images when observers are shaking their heads and that leads to the conclusion that such a failure depends on the human visual perception and happens on the retina of the eye of the observer.

A lot of algorithms actually are based on a motion estimator in order to be able to anticipate the motion of the eye to reduce or suppress this false contour effect. Nevertheless, the human eye is an analogue system and it is worth trying to adapt the presentation with the help of a digital processing on a purely digital viewing system as the plasma display panel with the help of a digital video picture processing. In said case some artefacts can be generated which can make more damages in the picture than improvements in terms of false contour effect.

A lot of solutions have been published concerning the reduction of the PDP false contour effect based on the use of a motion estimator as described in the patent application EP 0 978 817 A1. A related solution can be found in the patent application EP 0 973 147 A1. This disclosure also addresses the problem of over-compensation and makes a decision whether the compensation is applied or not based on the distribution of the density gradient in the image. But also these solutions do not deliver an optimum picture quality for some critical picture contents.

Invention

Therefore, it is an object of the present invention to disclose a method and an apparatus which further improves the false contour effect compensation without affecting the picture content and which is easy to implement. This object is achieved by the measures claimed in claims 1 and 11.

According to the claimed solution in claim 1 the further improvement of the false contour effect compensation is based on providing at least one correction parameter for the subjective pixel in addition to the initial parameter for the subjective pixel which is required for activating a pixel. The initial parameter and the correction parameter are compared with respect to size and depending on the difference between the values it is decided whether the cell is activated with the correction parameter or with the given parameter.

This method has the advantage that before the correction parameter is used, it is checked whether the quality of the picture is really improved or not. Thus, the general idea of the invention is to use the result of the compensation method only if it leads certainly to a higher quality of the picture. This advantage is attained in an easy way by comparing the initial parameter with the correction parameter and by a decision which is made depending on the result of the comparison. So it is not necessary to change the known compensation method itself for improving the picture quality. The solution based on the proposed method has the further advantage that it does not add false information in the picture, and in addition, this method is independent from the picture content and also from the sub-field organization. Also, the method is not dependent from the used addressing technique for the plasma display panel.

**EP 1 162 571 B1**

The inventive method is independent from the used compensation method and can therefore be used for different compensation methods. Therefore, the general idea of the invention can be used in all compensation methods. The method according to the invention has the advantage that it is easy to implement. There is no need of a big memory since it does not need a great change of the used compensation method.

Advantageously, additional embodiments of the inventive method and apparatus are disclosed in the respective dependent claims.

One important parameter which is used as a initial parameter and as a correction parameter is the time during which the pixel is illuminated in a frame period. The time for illuminating the pixel decides over the quality of the video picture. A precise determination of the illuminating time is therefore necessary for a high quality. Therefore, the illumination time is used as a parameter for deciding whether the picture quality can be improved or not.

A good quality of the video picture is maintained if the difference is compared with a function which depends on a motion vector of the pixel. The motion vector of the pixel is usually determined by a motion estimation unit.

Experiments have shown that the motion vector of the pixel is also an important parameter which can be used for deciding whether there should be a correction of a parameter for activating a pixel. For many known compensating methods it is an advantage not to use the correction parameter which was determined by the compensation method if the motion vector of the pixel is smaller than a comparison motion vector. For a small motion vector it is an advantage to use the initial parameter instead of the correction parameter.

Another advantageous embodiment of the method is to compare the difference between the initial parameter and the correction parameter with a function which depends on the activating time of the pixel. Depending on the difference between a initial activating time and the corresponding correction activating time, it is often advantageous to use the initial activating time instead of the correction activating time if the initial activating time is large in relation to the correction activation time. Therefore, it is advantageous to take the activating time of the pixel into account for deciding whether the given activating time or the correction activating time should be used.

A further improvement of the quality of the picture can be obtained if also the activating times of the pixels are considered which are located on the motion vector trajectory of the pixel. This avoids the reduction of picture sharpness in case of sharp transitions in the picture or periodical structures with sharp transitions.

Especially, a comparison of the difference between the initial parameter and the correction parameter of a current pixel with a function of the difference between the amplitude value of a pixel and the greatest amplitude value of the pixels, located on the motion vector, assures that no loss of sharpness occurs on strong transitions (edges) in the picture.

Advantegeous embodiments of an apparatus for processing video pictures are disclosed in claims 11 to 13.


Drawings

Exemplary embodiments of the invention are illustrated in the drawings and are explained in more detail in the following description.

In the Figures:

Fig. 1 shows a video picture in which the false contour effect is simulated;

Fig. 2 shows an illustration for explaining a first subfield organization of a plasma display panel;

Fig. 3 shows an illustration for explaining a second subfield organization of a plasma display panel;

Fig. 4 shows an illustration for explaining the false contour effect occurring on homogeneous areas;

Fig. 5 illustrates the failure produced on the eye retina due to false contour effect;

Fig. 6 illustrates a false contour effect occurring at a moving edge in a picture;

Fig. 7 shows the failure produced on the eye retina for the example shown in Fig. 6;

Fig. 8 shows an existing approach for dynamic false contour compensation on pixel level;

Fig. 9 shows a perfect compensation method on sub-pixel level;

Fig. 10 shows the result of the false contour compensation based on the method shown in Fig. 8;

3

Fig. 11    illustrates the concept of amplitude analysis for the perfect compensation method of Fig. 9;

Fig. 12    illustrates the result of an amplitude analysis for the compensation example shown in Fig. 10;

Fig. 13    illustrates the result of an amplitude analysis for the false contour compensation at a moving edge;

Fig. 14    depicts an illustration for explaining why it is advantageous to take the amplitude values of the pixels lying on the motion vector trajectory into account for the compensation control;

Fig. 15    shows a complete algorithm block diagram for the invention, and

Fig. 16    shows the conception of the limitation block.

Exemplary embodiments

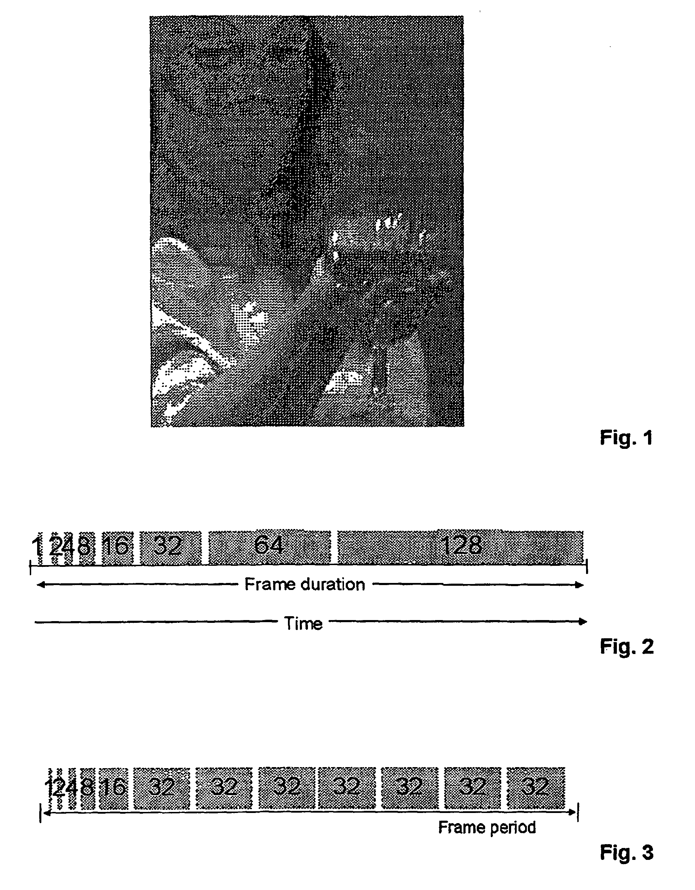

The artefact due to a false contour effect is shown in Fig. 1. On the arm of the woman are shown two dark lines, which for example are caused by the false contour effect. Also in the face of the woman such dark lines occur on the right side. Also luminous lines are occuring depending on video encoding and movement direction.

A plasma display panel utilizes a matrix array of discharge cells which could only be switched on or off. At least one cell for the colour red, blue and green is necessary for one pixel for displaying a coloured picture. For displaying a grey level picture only one single cell for one pixel is sufficient. Each cell can be controlled and activated independently from the other cells. The invention is described in a simple way by using the word pixel in the meaning that the pixel consists only of a single cell. Pixel and cell are therefore used as synonyms. Also unlike a CRT or a LCD in which grey levels are expressed by analogue control of the light emission, in a PDP the gray level of a pixel is controlled by modulating the number of light pulses which the pixel sends out during a frame period. This time-modulation will be integrated by the eye of an observer over a period corresponding to the eye-time response. When an observation point (eye-focus area) on the PDP screen moves, the eye will follow this movement. Consequently, it will no more integrate the light from the same cell over a frame period (static integration), but it will integrate information coming from different cells located on the movement trajectory. Thus it will mix all the light pulses during this movement which leads to a faulty signal information. This effect now will be explained in more detail below.

As previously said, a Plasma Display Panel (PDP) utilizes a matrix array of discharge cell which can only be "ON" or "OFF". The PDP controls the gray level by modulating the number of light pulses per frame. The eye will integrate this time modulation over a period corresponding to the human eye time-response.

Let us assume, we want to dispose of 8 bit luminance levels, in that case each level will be represented by a combination of 8 bits having the following weights:

**1 - 2 - 4 - 8 - 16 - 32 - 64 - 128**

To realize such a coding with the PDP technology, the frame period will be divided in 8 lighting periods (called sub-fields), each one corresponding to a bit. The number of light pulses for the bit "2" is the double as for the bit "1"... With these 8 sub-periods, we are able through combination, to build the 256 gray levels. Without motion, the eye of the observers will integrate over about a frame period these sub-periods and catch the impression of the right gray level. Figure 2 presents such a decomposition.

In order to improve the picture quality of moving images, more than 8 subfields are used today. Some example of such coding schemes are given here, the choice of the optimal one has to be made depending on the plasma technology.

For the example presented in Fig. 3, the sum of the weights is still 255 but the light distribution of the frame duration has been changed in comparison with the previous 8-bit structure. The sub-field organisation shown in Fig. 3 is based on 12 sub-fields and thus each sub-field code word for a luminance representation is a 12 bit code word.

The light emission pattern according to the sub-field organization introduces new categories of image quality degradation corresponding to disturbances of gray levels and colours. A specific term for these disturbances used in the literature is "dynamic false contour effect" since the fact that it corresponds to an apparition of coloured edges on the picture when an observation point of the PDP screen moves. The observer of the picture has the impression of a strong contour appearing on an homogeneous area like displayed skin. The degradation is enhanced if the image has a smooth gradation and also, when the light emission period exceeds several milliseconds. Therefore, in dark scenes the effect is not so disturbing as in scenes with average grey level (for example luminance values from 32 to 253).

In addition, the same problem occurs in static images when the observer is shaking his head which leads to the conclusion that such a failure depends on the human visual perception.

As already said, this degradation has two different aspect:

- on homogeneous areas like skin, it leads to an apparition of colored edges
- on sharp edges like object borders, it leads to a blurred effect reducing the global picture sharpness impression.

To understand a basic mechanism of visual perception of moving images, two simple cases will be considered corresponding to each of the two basis problems (false contouring and blurred edges). In order to simplify the exposition these two situations will be presented in the case of the following 12 sub-field encoding scheme:

1 - 2 - 4 - 8- 16- 32 - 32 - 32 - 32 - 32 - 32 - 32

First, a transition between the luminance level 128 and 127 moving at a speed of 5 pixels frame will be considered with the assumption thatthe eye is following this movement.

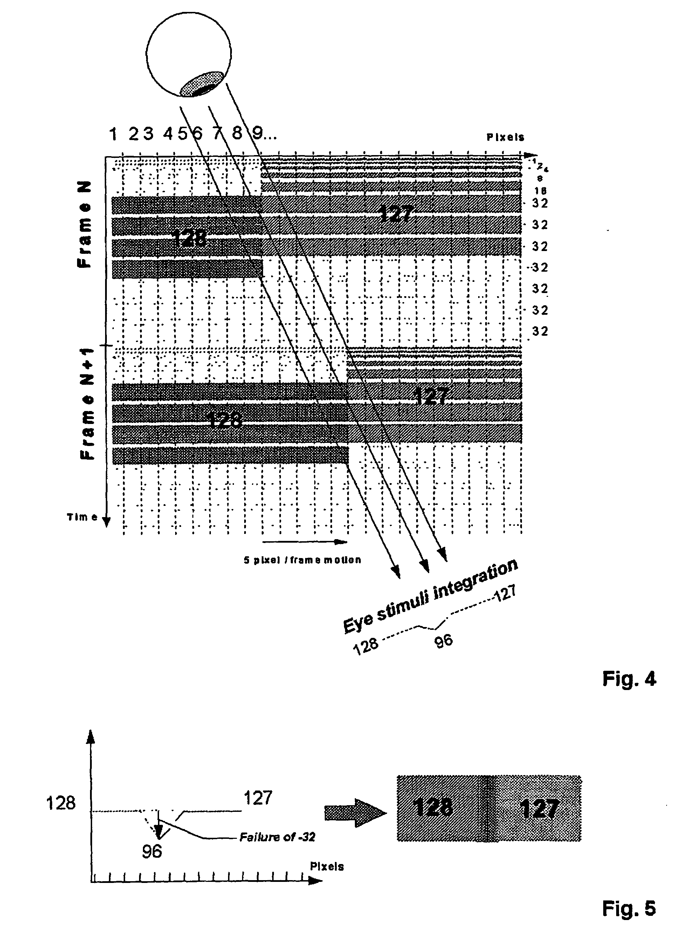

Fig. 4 shows a darker shaded area corresponding to the luminance level 128 and a lighter shaded area corresponding to the luminance area level 127. The sub-field organization shown in Fig. 2 is used for building the luminance level 128 and 127 as it is depicted on the right side of Fig. 4. The three parallel lines in Fig. 4 indicate the direction in which the eye is following the movement. The two outer lines indicate the borders of the area where a faulty signal will be perceived. Between them the eye will perceive a lack of luminance which leads to the appearance of a dark edge in the corresponding area which is illustrated in Fig. 5. The effect that a lack of luminance will be perceived in the shown area is due to the fact that the eye will no more integrate all lighting periods of one pixel when the point from which the eye receives light is a moving point. Only part of the light pulses will be integrated when the point moves. Therefore, there is a lack of corresponding luminance and a dark zone will occur. In Fig. 4 there is at the bottom the eye-stimuli integration curve which shows a lower luminance between the level 128 and 127. This is shown in Fig. 5 in greater detail. On the left side of Fig. 5 there is shown a curve which illustrates the behaviour of the eye cells during observing the moving picture depicted in Fig. 4. The eye cells having a good distance from the horizontal transition will integrate light enough from the corresponding pixels. Only the eye cells which are near to the transition will not be able to integrate a lot of light from the same pixel point. On the right side of Fig. 4 there is shown the picture which the observer perceives when he observes the two frames shown in Fig. 4. Between the two levels 128 and 127 there is a dark zone with a lower quantity of luminance.

In case of black/white pictures this effect corresponds to the apparition of artificial white or black edges. In the case of coloured pictures since this effect will occur independently on the different colour components R,G,B, it will lead to the apparition of coloured edges in homogeneous areas like skin.

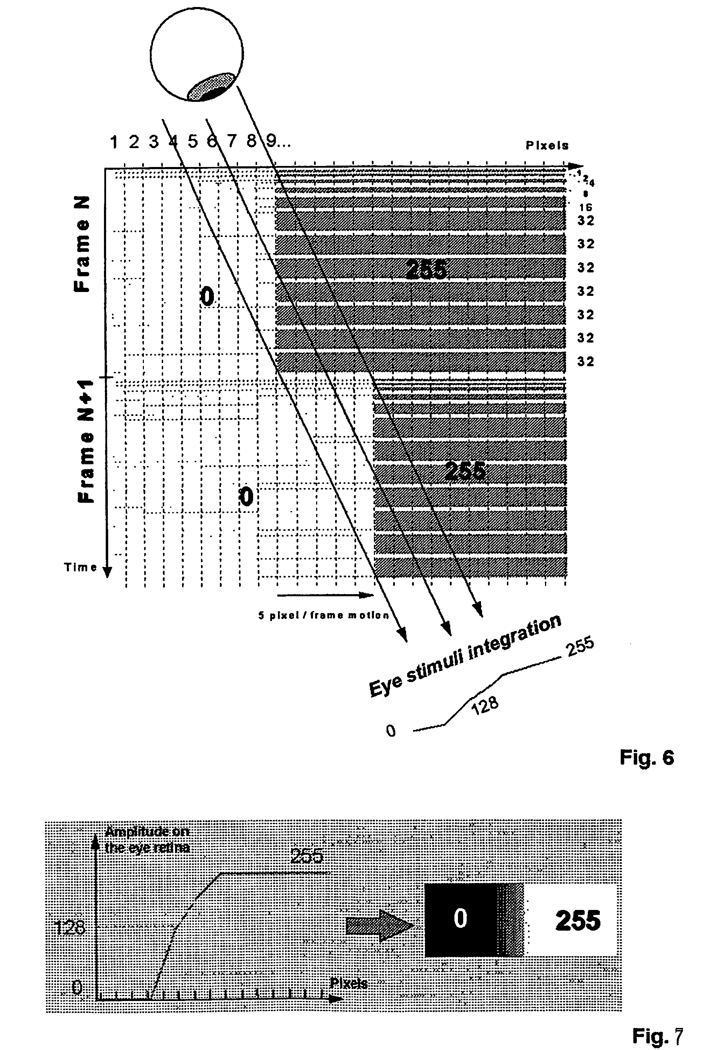

Fig. 6 shows a situation in which an object border moves five pixels to the right side from frame N to frame N+1. The light area has the level 0 and the dark area has the level 255 for the luminance. The eye is following the movement of the five pixels per frame. In Fig. 6 is shown the eye-stimuli integration curve which shows the distribution of the luminance over the area.

In Fig. 6 we can follow the behaviour of the eye integration during a movement. The two extreme diagonal eye integration lines show the limits of the faulty perceived signal. Between them the eye will perceive a growing luminance which leads to the appearing of a shaded edge which is shown in Fig. 7. Consequently, the pure black to white transition will be lost during a movement and that leads to a reduction of the global picture sharpness impression.

As explained previously the false contour effect is produced on the eye retina when the eye follows a moving object since it integrates the right information at the wrong places. There are different methods to reduce such an effect and the more serious ones are based on a motion estimator (dynamic methods) which aim to detect the movement of each pixel in a frame in order to anticipate the eye movement or to reduce the failure appearing on the retina with different corrections.

The goal of each dynamic algorithm is to define for each pixel looked by the eye the track the eye is following the movement during a frame in order to generate a correction on this trajectory. Consequently, for each pixel of the frame N it is determined a motion vector $V = (V_x; V_y)$ which desbribes the complete motion of the pixel from the frame N to the frame N+1 and the goal of a false contour compensation is to apply a compensation on the complete trajectory defined by this vector. Such a compensation applied on a moving edge will improve its sharpness on the eye retina and the same compensation applied on a moving homogeneous area will reduce the appearance of coloured edges.

Obviously, since the plasma display panel is an array of cells, the trajectory used for the compensation has to be converted from the geometrical definition of the vectors to a set of positions of pixels in the panel. On one hand, the structure of this matrix array enables only one correction applied for each pixel. On the other hand, the eye is an analogue system and will integrate the information at a sub-pixel level. This difference will introduce a new kind of artefact which will be presented hereinafter.

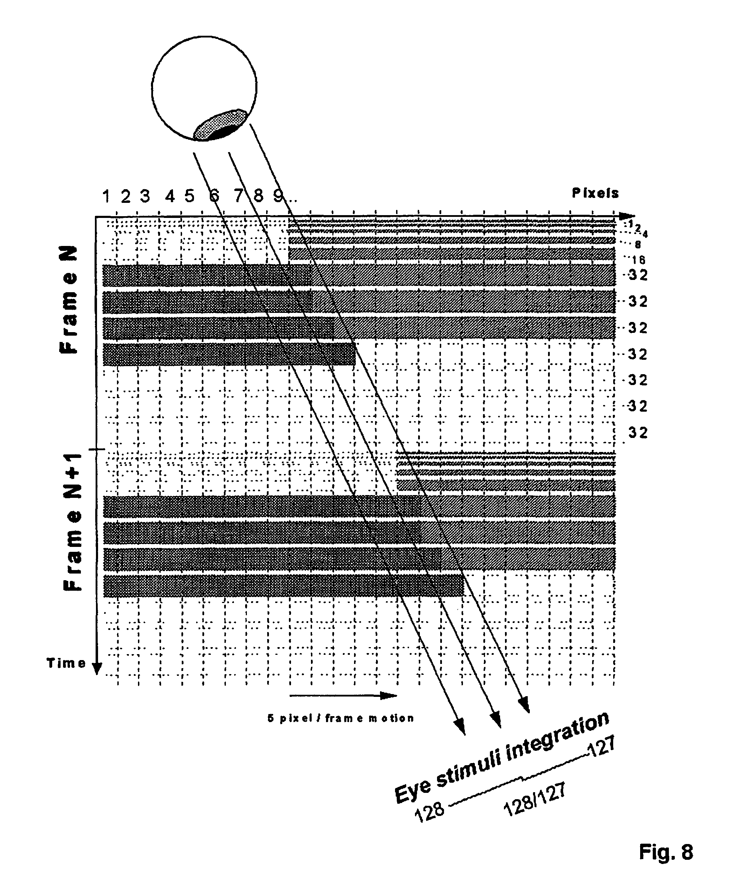

Fig. 8 shows the principle of dynamic false contour compensation as it is described in the patent application EP 0 978 817 A1 of the applicant. The example shown in Fig. 8 is the result of such a compensation method applied to the example shown in Fig. 4. In comparison with Fig. 4 it is evident that the contour between the first area with the luminance level of 127 and the second area with the luminance level of 128 is no more a horizontal straight line but a line with edges, whereby within one frame the second area is moving to the right side of the first area. The shifting of subfield entries within one frame leads to a higher quality in the picture. More details concerning the dynamic false contour compensation methods are described in the patent application EP 0 978 817 A1 and for the full disclosure of this method it is expressively referred to this document.

Vertical lines indicate the pixel borders and horizontal stripes correspond to the subfields. For the pixels numbered 10, 11, 12 in frame N (counted from the left to the right) and 15, 16, 17 in frame N+1 the subfield code words have been corrected compared to original ones shown in Fig. 4. In the corrected subfield code words the nineth subfield is additionally activated. While the corrected pixels have luminance levels of 159, which would be incorrect for static pictures, this assures that the eye will catch the right impression of luminance level 128 when observing the moving transition along the line in the middle of the 3 parallel lines in Fig. 8. The new sub-field code words representing the luminance levels 159 in the picture are regarded as correction parameters which were determined by the compensation method in the known manner disclosed in the above-mentioned patent application.

In the eye stimuli integration curve shown at the bottom of Fig. 8, it is shown that the used compensation method leads to a correct transition between the level 128 and 127 so that the quality of the picture is improved. This technique shows very good results since it makes it possible to remove completely the false contour effect for great motion vectors. In the case of small motion vectors between one frame and the following frame some artefacts caused by the compensation method can appear. This is due to a lack of flexibility in the sub-field shifting. In fact, it is obvious that in a matrix array like a PDP it is only possible to move a sub-field to a fixed pixel position in the picture. Nevertheless, for slow speed, the eye is mainly integrating subfields on a sub-pixel level and this can lead to the generation of some other false contour artefacts that can be higher than the original ones.

Let us take the example of a Sub-field code in a sub-field organisation with 9 sub-fields with the weights described as following:

$$2 - 4 - 7 - 11 - 18 - 29 - 43 - 60 - 80$$

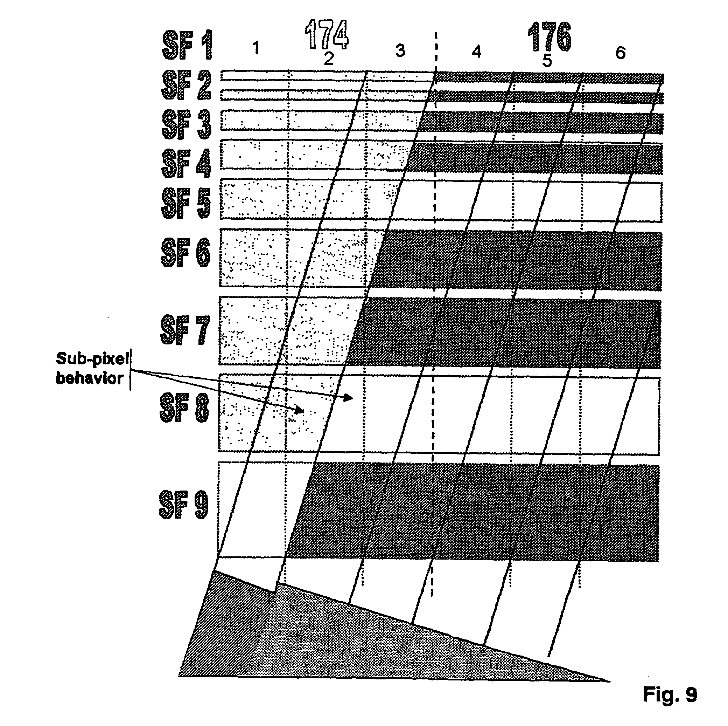

Now, it is assumed that a small transition 174/176 is moving to the left at a speed of 2 pixel per frame. This could be the case in case of displayed skin from a person moving to the left. In that case, the eye will follow the whole object/person and a false contour effect for this transition 174/176 will appear on the retina. Figure 9 illustrates a perfect false contour compensation made at sub-pixel level on this transition.

In Fig. 9, the gray curve, at the bottom, represents the result of the eye integration on the retina. This integration leads to a perfect transition 174/176 without any artifacts. Nevertheless, such a correction, based on sub-pixel level, is not feasible; only a complete shifting of the sub-field based on a complete pixel is possible.

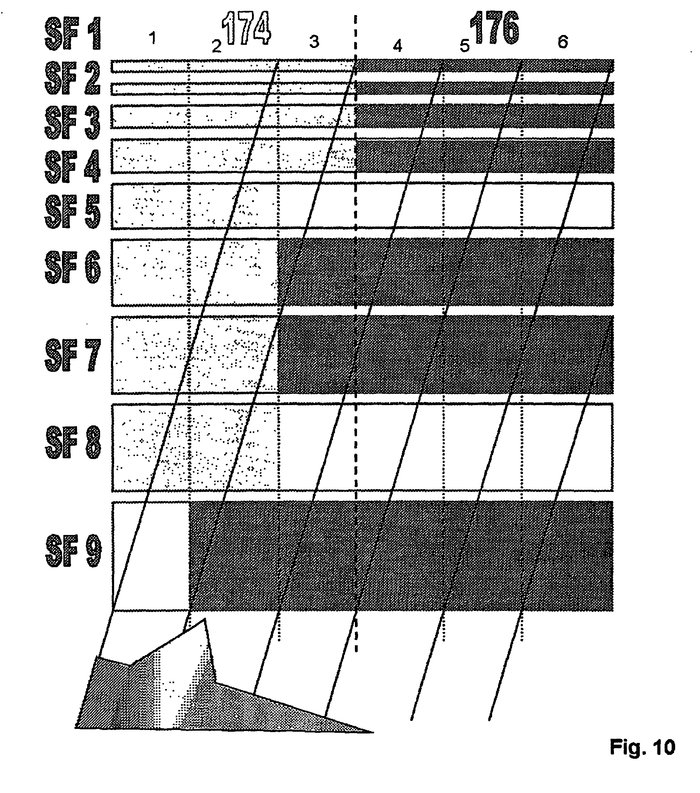

For that reason, it is necessary to round the sub-field shifting in order to position the sub-field entries completely at a new pixel position. This is shown in Fig 10.

At the bottom of Fig. 10 there is shown the gray curve representing the integration on the retina of an observer which is moving during the frame along the parallel axis. Because of the lack of flexibility in the sub-field shifting at low speed there is strongly visible on the gray curve an area with a too high luminance level which is shown as a white area. In said case it leads to an artefact on the retina which is much stronger than the original false contour effect. This effect is mainly visible at low speed since for such a movement, the needed sub-field shifting is very small and the lack of flexibility in a matrix array leads easily to artefacts during this kind of compensation made on bit level/bit resolution.

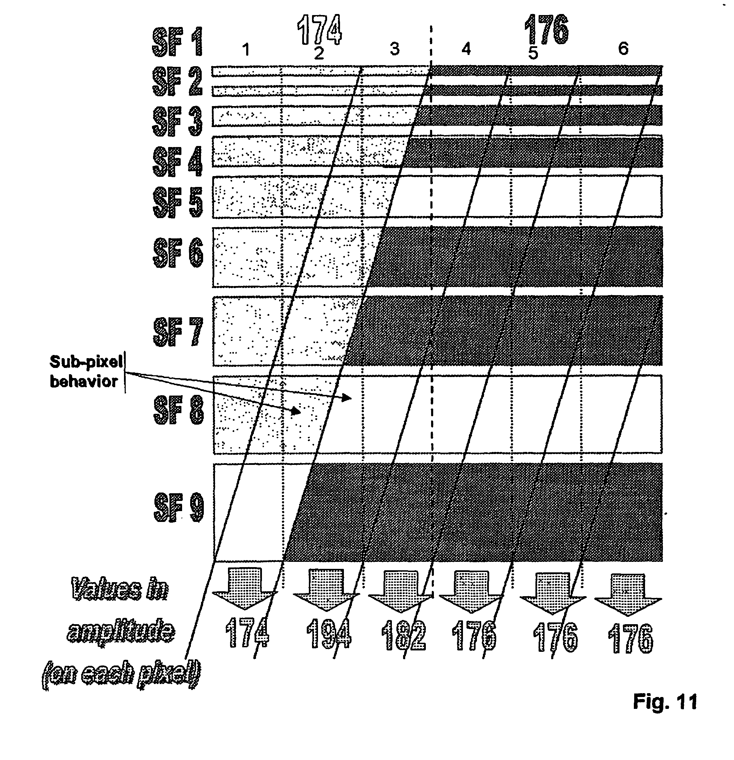

In order to understand how such a failure can be detected, in Fig. 11 the change in the amplitude domain at pixel level resulting from the correction made on sub-pixel level is depicted. The amplitude domain represents the illumination energy located at each pixel on the panel and resulting from a light integration when the movement will not be followed. The amplitude is directly proportional to the activation time of the pixel. Fig. 11 shows one frame in which two areas are shown, whereby the first area has the luminance level 174 and the second area has the luminance level 176. There are six pixels illustrated. The stripes SF1 to SF9 show the nine sub-field time periods which are available to illuminate the pixel with light pulses. The diagonal lines correspond to the moving of the eye of an observer during the frame. At the bottom of Fig. 11 we see the amplitude for the pixel on the panel itself after the compensation being done at sub-pixel level. This means that it is not represented at this time the energy located on the retina (which follows the movement) but the energy located on the corresponding cell of the panel itself which does not follow any movement. The maximum change against the original values (174/176) is about 20 for this example at the $2^{nd}$ pixel with the level of 194.

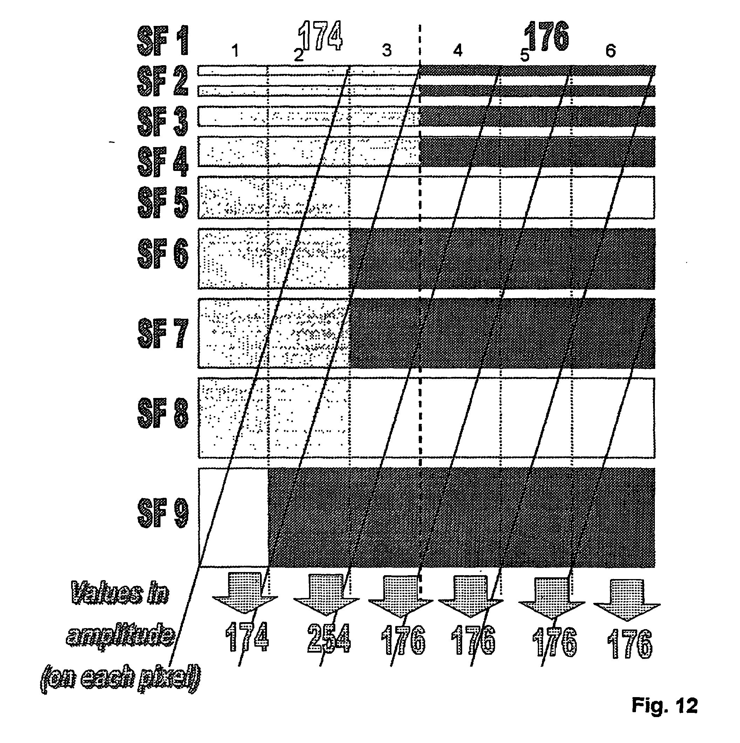

Fig. 12 shows an example for the amplitude domain of an implemented compensation. Depicted is the same situation as in Fig. 11, however, here a compensation on pixel level is applied and at the bottom of Fig. 11 the amplitude values are therefore different for the pixels of the transition. The maximum amplitude change is about $\Delta = 80$ which occurs between the first and the second pixel. This means that the compensation has added an amplitude of about 80 in energy to the second pixel, which is very high for a speed of only two pixels per frame which was used in this example. Obviously, the failure which appears on the retina is already detectable in the amplitude domain since it corresponds to a kind of over-compensation. The over-compensation adds too much energy in the picture in comparison with the motion vector between frame N and frame N+1.

Taking this example we have shown that artefacts generated by compensation, in this example an over-compensation, are not only visible on the human retina but can be detected in the amplitude domain, too. The amplitude domain means the level of luminance which is sent out by a cell/pixel. The level of luminance is proportional to the activating time during which the cell is activated for light emission.

Some experiments revealed that the level of false contour increases with the speed of the movement of objects between one frame and the other. This means that the level of false contour increases with the modulus of the moving vector. Therefore, in the approach according to the invention the level of compensation is advantageously limited in the amplitude domain dependent on the motion vector modulus to avoid any over-compensation effect.

The basic concept behind this approach can be described as follows: Before using a correction parameter, which was determined by a compensation method, the correction parameter is compared with the original parameter without compensation. The difference between the correction parameter and the given parameter can be compared in a first advantageous embodiment of the invention with the motion vector V (x, y) at the position (x, y) at which the pixel is located, to which the original parameter and the correction parameter belong. Is the motion vector modulus greater than the difference between the correction parameter and the given parameter, then the correction parameter is used for plasma cell activation instead of the original parameter.

For clarification, the expression parameter is used as a general term. More specifically, for the current plasma display technology, the expression "original parameter" corresponds to the original amplitude level of a colour component R,G,B of a pixel and the correction parameter corresponds to the amplitude level after applying the compensation method.

This basic concept has to be adapted to the different compensation methods, so that the comparison between the difference value between the original and correction parameter can be compared with a function f(t) which depends on the motion vector length. The function can be a polynomial as described in the next formula: $f(t) = a_1 t + a_2 t^2 + \dots + a_n t^n$.

Obviously, the different values of $a_1, a_2 \dots a_n$ are variable and depend strongly on the coding scheme used for illuminating the pixel. In addition, any other kind of function can be defined depending on the used sub-field coding and addressing methods.

One of the main important parameters is the illuminating time which is proportional to the amplitude of luminance of the pixel/cell. Therefore, one embodiment of the inventive method is disclosed with the following formular: The compensation result is valid when

$$\left| A_i(x,y) - A_c(x,y) \right| \leq f_{loc}\left( \left\| \vec{V}(x,y) \right\| \right). \qquad (1)$$

In this formula $A_i(x, y)$ represents the initial amplitude of luminance of the pixel located at position (x, y), $A_c(x, y)$ represents the new amplitude value which was determined by the used compensation method,

$$\left\| \vec{V}(x,y) \right\|$$

represents the modulous of the motion vector at the current location and $f_{loc}$ represents a mathematical function, called "local limitation function". When the compensation amplitude rises above this local limitation function, the compensation will be disabled at this location, this means for this pixel.

Furthermore the function can include a kind of proportionality to the initial amplitude value since the human eye is more sensitive to relative luminance (Weber Fechner Law). This means, that luminance differences are better perceived in dark areas than in light ones. In said case the test should not be limited to an amplitude value but also to a percentage value like presented in the next formula:

$$\left| A_i(x,y) - A_c(x,y) \right| \leq f_{loc}\left( \left\| \vec{V}(x,y) \right\|, A_i(x,y) \right). \qquad (2)$$

In this case the local limitation function $f_{loc}$ depends on the vector amplitude $\|\vec{V}(x,y)\|$ and depends on the original amplitude $A_i(x,y)$ of the current pixel. The following formula shows a simple version of the local limitation function:

$$\left| A_i(x,y) - A_c(x,y) \right| \leq k \times \left\| \vec{V}(x,y) \right\| \times \left| A_i(x,y) \right|. \qquad (3)$$

where k is a value which has to be chosen by experiments.

It is repeated that different kind of functions can be used according to the invention. It is not necessary to use a polynomial function. The major concept is to limit the level of the correction by a function depending on different parameters like the motion vector, the original amplitude, an activating time and so on. The kind of parameters which are used depend on the display technology, sub-field organisation, power level mode, addressing scheme, etc.. The shown parameters are only examples for a lot of parameters which will also lead to a higher quality of the picture by using them for limiting the compensation amplitude.

Nevertheless, these kind of limitation functions are not enough to ensure a better false contour compensation behaviour for the complete picture. In case of a homogeneous area with only small transitions, (for example the transition between the level 174 to 176) the previous described functions ensure that we will not have too much energy in this homogeneous areas and that is the goal of this new concept.

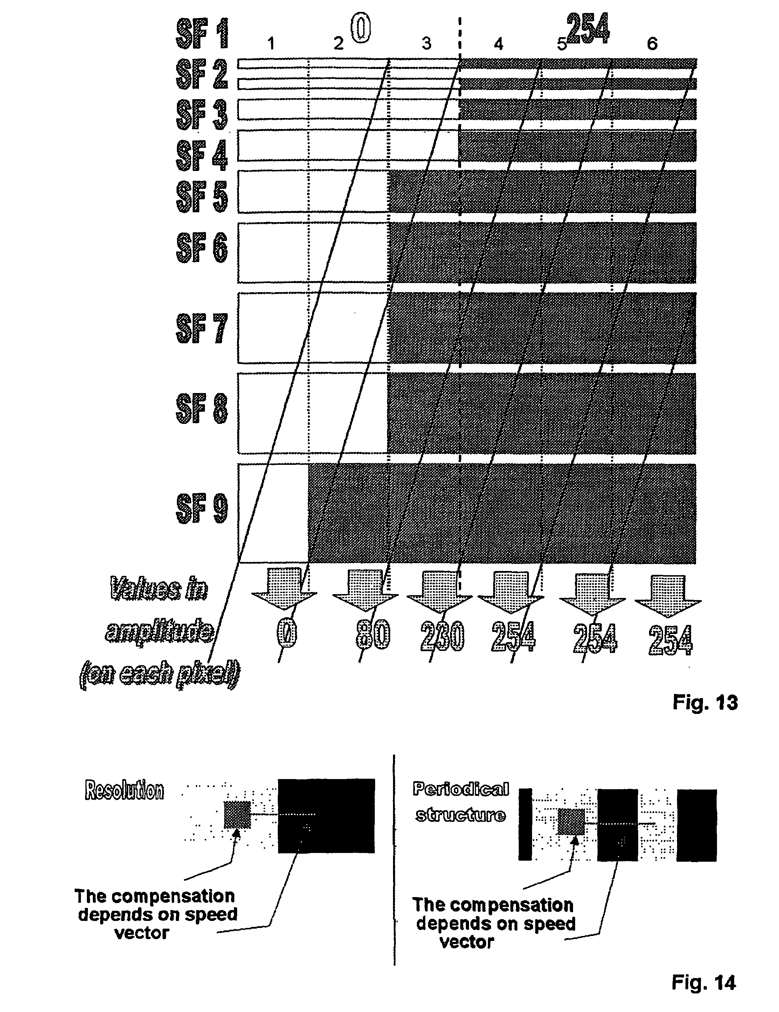

However, in the case of a strong transition, for example changing from the luminance level 0 to the level 255 within one pixel to the other, the phenomenon is quite different as shown in Fig. 13.

From Fig. 13 it can be seen that the compensation of a movement of a white to black transition needs the shifting of luminance information in the black area on the panel itself to position light where the eye will look at. In that case the big amount of energy added to the black area is not coming from a compensation failure but only from the displacement of another picture content in this black area. Even in the case of a perfect compensation such an effect will occur and it is fully normal. A compensation of such a structure will increase a lot the picture global sharpness by improving the quality of moving edges. From the amplitude values at the bottom of Fig. 13 it can be seen that there is a slow rising of the amplitude value from the value 0 over the value 80 and the value 230 to the value 254.

In this case, even if there is no perfect correction at sub-pixel level, the eye will not see any disturbances on the black/white border since there is already a strong transition and the so-called eye-masking effect (Mach phenomenon occurring between the eye photoreceptors and increasing the transition for the human brain) will catch any rounding problem due to a shifting made at pixel level and not at sub-pixel level. For these reasons it is very important not to limit the correction parameter calculated by the compensation method in that case.

The following Fig. 14 presents two different similar situations which can appear in a picture. The two pictures show two situations in which energy can be moved and should not be limited. In those cases a limitation of the compensation will lead to a reduction of the resolution and cause blurred edges or to the destruction of periodical structures. On these figures it seems obvious that the energy transmitted to the current part of the picture can come from the whole vector trajectory and not only from the vector origin (case of periodical structure). On the left side of Fig. 14 there is shown a white and a black area, whereby an area is moving out of the black area into the white area, the corresponding motion vector is shown, too. In this case the compensation level depends on the speed and the vector origin, which lies in the black area. The motion vector V which is shown describes the motion between one frame and the following frame.

On the right side of Fig. 14 there is shown a periodical structure consisting of different black and white areas, whereby an object is moving from a white area over a black area to another white area. The movement of the area from one frame to another is shown with an arrow which illustrates the motion vector. In this case the compensation level depends on the speed of the motion which means the motion vector modulous, and the motion vector trajectory.

In these cases a second test should be added for compensation control which checks whether the limitation of the compensation is not only related to the current pixel at the position x, y, but also to the information located on the vector trajectory. In this way a kind of analysis is being made whether the current pixel is in the surrounding of a strong transition which requires an extra treatment. This new test called "trajectory limitation function" can be described with the following algorithm:

DeltaMAX = 0

```
For (all positions x₀ and y₀ located on the vector trajec-
tory)
{
    if(|Aᵢ(x, y)- Aᵢ(x₀, y₀)|≥ DeltaMAX)
    {
    DeltaMAX = |Aᵢ(x, y)- Aᵢ(x₀, y₀)|; /*highest difference to the
                                                    current value */
    AmplitudeMAX = Aᵢ(x₀, y₀);              /*Amplitude bringing highest
                                                    difference*/
    }
}
```

$$\mathbf{if} \; \left| A_i(x,y) - A_c(x,y) \right| \leq f_{traj}\left( \left\| \vec{V}(x,y) \right\|, A_i(x,y), \text{AmplitudeMAX} \right) \; \Rightarrow$$

**Compensation valid**                                                    (4)

In this algorithm $A_i(x,y)$ represents the initial amplitude of the pixel located at the position $(x, y)$; $A_c(x,y)$ represents the new value obtained after compensation,

$$\left\| \vec{V}(x,y) \right\|$$

represents the amplitude of the motion vector at the current location, AmplitudeMAX represents the amplitude value of the pixel on the motion vector trajectory with the strongest difference to the current value (DeltaMAX represents this difference = imported energy) and $f_{traj}$ represents a mathematical function, called trajectory limitation function. When the compensation amplitude overcomes the trajectory limitation function, the compensation will be disabled at this location(pixel).

As already explained, different kinds of functions can be defined depending on the coding scheme and addressing method. As an example it is proposed a very advantageous function in the next formula:

$$|A_i(x,y)-A_c(x,y)| \leq I \times \|\vec{V}(x,y)\| \times |A_i(x,y)- \text{AmplitudeMAX}|.$$                (5)

The value I needs to be optimized by experiments.

The main idea of this embodiment of the invention is to take the motion vector trajectory into account for compensation control, i.e. to more reliably determine whether strong transitions are involved.

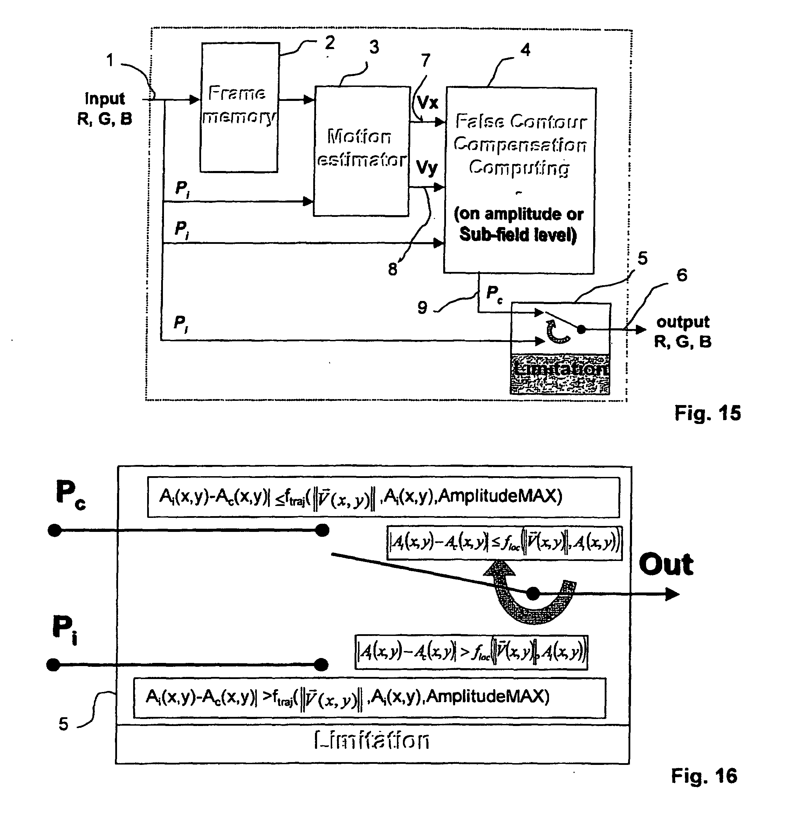

Fig. 15 illustrates the complete false contour algorithm principle including the amplitude limitation function in block diagram form. An input 1 is connected to a frame memory 2 which itself is connected to a motion estimator 3. The motion estimator 3 forwards motion vector component data $V_x$, $V_y$ via respective data lines 7, 8 to the computing unit 4. The computing unit 4 is connected to a limitation unit 5 via an output line 9. The limitation unit 5 comprises an output 6 which is connected to a sub-field coding unit (not shown). After sub-field encoding the data is forwarded to the display electronics. In this electronic the addressing, sustaining and erasing periods are generated for each sub-field. The activating time during which a pixel is illuminated is controlled in this unit by scanning the plasma cells and writing corresponding addressing signals in the cells. Corresponding electronic components are available from the prior art and need not be explained in detail here.

The limitation unit 5 forwards either the corrected sub-field code words to the display electronics or the uncorrected/original sub-field code words. The input 1 is also connected to an input of the motion estimator 3, the computing unit 4 and the limitation unit 5.

Over the input 1 the original parameter $P_i$ of a pixel P is sent to the frame memory 2, the motion estimator 3, the computation unit 4 and the limitation unit 5. The given parameter $P_i$ is in one embodiment simply the R,G,B data for each pixel. The frame memory 2 stores the R,G,B data for the time of one frame period and provides the motion estimator 3 with these values one frame later. The motion estimator 3 calculates from the R,G,B values or luminance values derived therefrom of the frame N and the frame N + 1 a motion vector for each pixel $P_i$. The computing unit 4 determines out of the motion vector components $V_x$, $V_y$ and the corresponding R,G,B values, a correction parameter $P_c$ based on amplitude level with which the pixel should be activated instead of the original parameter $P_i$ for improving the quality of the picture. Details for the compensation method on amplitude level are well known from the literature and will not be described at this place in more detail.

The correction parameter $P_c$ and the initial parameter $P_i$ are fed to the limitation unit 5 in parallel. The limitation unit 5 decides whether the intial parameter $P_i$ or the correction parameter $P_c$ will be forwarded to the display electronics as shown. The limitation is done if the original parameter and the correction parameter have a difference according to the above-mentioned formulas 1 to 5. Anyone of these limitation instructions can be applied singly or in any combination with each other. The limitation unit 5 aims at choosing between the output of the computing unit 4 and the initial parameter $P_i$.

Fig. 16 shows a preferred embodiment of the limitation unit 5. The limitation unit 5 provides as an output the initial parameter $P_i$ if the difference between the initial parameter $P_i$ and the correction parameter $P_c$ is greater than a local function $f_{loc}$ which depends on the quantity of the motion vector $\vec{V}(x,y)$ and/or the initial parameter $P_i(x,y)$. In addition it is checked, whether the difference between the initial parameter $P_i$ and the determined correction parameter $P_c$ is greater than a trajectory function $f_{traj}$ which depends on the AmplitudeMAX value and the motion vector $\vec{V}(x,y)$ and/or the initial parameter $P_i(x,y)$. In the case that both conditions are fulfilled, the limitation unit provides at the output the initial parameter $P_i(x,y)$. In all other cases, the correction parameter is output from limitation unit 6. The corresponding formulae are shown in Fig. 16, too.

In an alternative preferred embodiment of the invention, the false contour compensation in the computing unit 4 is performed on sub-field level as explained above and in particular in EP-A-0 978 817 A1. This means that to computing unit 4 and limitation unit 6 initial sub-field code words are fed. The computing unit 4 determines corresponding corrected sub-field code words. A Sub-field encoding unit needs to be added to the block diagramme in Fig. 15 ahead of the limitation block 6. The formulas applied in limitation block 6 need not be changed if the limitation block includes a transformation block in which the sub-field code words are transformed back to amplitude levels, which can be easily done according to the given sub-field organization. However, at the output of limitation unit 6 the original or corrected sub-field code words are forwarded to the display electronics.

The combination of the local limitation function $f_{loc}$ and the trajectory limitation function $f_{traj}$ ensures a reduction of the artefact visibility inside homogeneous areas and at strong horizontal or vertical transitions with the use of a false contour compensation.

The claimed invention improves the efficiency of each dynamic false contour correction based on any kind of compensation method, especially a correction based on a motion estimator since it reduces their artefacts without affecting their performances. The proposed algorithm concentrates its efforts in homogeneous areas and consequently do not affect the improvement in terms of sharpness coming from the compensation and occuring on strong edges. Furthermore, periodical structures are not affected by the inventive algorithm and their sharpness still remain improved. The invention does not request many modifications of existing compensation algorithms. It is only a post-processing comparison which decides whether the original parameter or the corrected parameter will be used.

The invention is described for the example of the activating time of the pixel as an initial parameter but the invention is not restricted to this example. The invention is advantageous for any kind of parameters which should be changed by a correction parameter calculated according to a compensation method.

In a coloured display panel there belong at least three cells to one pixel (according to the three colour components R,G,B. For each cell a given parameter and a correction parameter are used. So, before using the correction parameter instead of the given parameter for activating the cell, there is a comparison according to the invention necessary for each colour component.

**Claims**

1.  Method for processing video pictures to compensate for false contour effects,
    each video picture consisting of pixels,
    the video picture is displayed on a matrix panel,
    whereby one pixel is represented by at least one cell of the matrix panel,
    for a cell there is provided at least one initial parameter ($P_i$), which is proposed for controlling the cell activation,
    for the cell a correction parameter ($P_c$) is determined using a compensation method for an improved picture quality,
    **characterized in that**
    the initial parameter ($P_i$) and the correction parameter ($P_c$) are compared with respect to size and

depending on a value representing the difference between both parameters it is decided whether the cell activation is controlled with the correction parameter ($P_c$) or with the given parameter ($P_i$).

2. Method according to claim 1, **characterized in that** the parameters determine a time period, at which the cell is illuminated during one frame period.

3. Method according to claim 2, **characterized in that** the difference between the correction parameter ($P_c$) and the initial parameter ($P_i$) of a current pixel is compared with a predetermined value,
the cell activation is controlled with the correction parameter ($P_c$) if the difference is smaller than the predetermined value, and
the cell activation is controlled with the initial parameter ($P_i$) if the difference is greater than the predetermined value.

4. Method according to one of the preceding claims 1 to 3, **characterized in that** the predetermined value is derived from a function which is dependent on a motion vector of a pixel to which the correction parameter ($P_c$) and initial parameter ($P_i$) belongs.

5. Method according to claim 4, **characterized in that** the function is further or alternatively dependent on the size of the initial parameter ($P_i$) of the current pixel.

6. Method according to claim 4 or 5, **characterized in that** for activation control a picture sharpness enhancement test is furthermore performed in which it is analysed whether the current pixel is in the vicinity of a strong transition or a periodical structure in the picture.

7. Method according to claim 6, **characterized in that** for the picture sharpness enhancement test the difference between the correction parameter ($P_c$) and the initial parameter ($P_i$) of a current pixel is compared with a predetermined value,
the cell activation is controlled with the correction parameter ($P_c$) if the difference is smaller than the predetermined value, and
the cell activation is controlled with the initial parameter ($P_i$) if the difference is greater than the predetermined value.

8. Method according to claim 7, **characterized in that** the predetermined value is derived from a function which is dependent on the maximum difference between the initial parameter ($P_i$) of the current pixel and the initial parameters of the pixels lying on the motion vector trajectory for the current pixel.

9. Method according to claim 8, **characterized in that** the function is further dependent on the motion vector of the current pixel to which the correction parameter ($P_c$) and initial parameter ($P_i$) belongs.

10. Method according to claim 8 or 9, **characterized in that** the function is further dependent on the size of the initial parameter ($P_i$) of the current pixel.

11. Apparatus for processing video pictures to compensate for false contour effects, the video pictures consisting of pixels,
each pixel is represented by at least one cell of a dispal panel,
for the cell a given parameter is proposed for activating the cell,
comprising:

    a frame memory (2) for storing the given parameter of the cell,
    a false contour compensating unit (4) for computing a correction parameter for the cell,

**characterized in that**
the apparatus comprises a limitation unit (5),
the limitation unit (5) is adapted to compare the initial parameter ($P_i$) with the correction parameter ($P_c$) in size and to decide on a value representing the difference between the correction parameter and the initial parameter whether the cell will be activated with the initial parameter ($P_i$) or the correction parameter ($P_c$).

12. Apparatus according to claim 11, **characterized in that** the apparatus comprises a motion estimator (3) determining the motion of a pixel, whereby the limitation unit (5) is adapted to use the motion vector for deciding whether the initial or the correction parameter ($P_c$) will be used.

**13.** Apparatus according to claim 11 or 12, **characterized in that**
the limitation unit (5) is adapted to calculate a difference between the initial and the correction parameter ($P_C$) and to compare the difference with a function depending on the motion vector.

**14.** Apparatus according to one of claims 11 to 13, **characterized in that** the limitation unit (5) is adapted to calculate a difference between the initial and the correction parameter ($P_C$) and to compare the difference with a function depending on the initial parameter ($P_i$).

**Patentansprüche**

**1.** Verfahren zur Verarbeitung von Videobildern, um falsche Kontur-Effekte zu kompensieren, wobei jedes Videobild aus Pixeln besteht und das Videobild auf einem Matrixschirm angezeigt wird, wobei ein Pixel durch wenigstens eine Zelle des Matrixschirms dargestellt wird, wobei für eine Zelle wenigstens ein Anfangs-Parameter ($P_i$) vorgesehen wird, der für die Steuerung der Zellenaktivierung vorgeschlagen wird, wobei für die Zelle ein Korrektur-Parameter ($P_C$) unter Verwendung eines Kompensationsverfahrens für eine verbesserte Bildqualität bestimmt wird, **dadurch gekennzeichnet, dass** der Anfangs-Parameter ($P_i$) und der Korrektur-Parameter ($P_C$) in Bezug auf Größe verglichen werden und in Abhängigkeit von einem Wert, der die Differenz zwischen beiden Parametern darstellt, entschieden wird, ob die Zellenaktivierung mit dem Korrektur-Parameter ($P_C$) oder mit dem gegebenen Parameter ($P_i$) gesteuert wird.

**2.** Verfahren nach Anspruch 1, **dadurch gekennzeichnet, dass** die Parameter eine Zeitdauer bestimmen, bei der die Zelle während einer Vollbildperiode beleuchtet wird.

**3.** Verfahren nach Anspruch 2, **dadurch gekennzeichnet, dass** die Differenz zwischen dem Korrektur-Parameter ($P_C$) und dem Anfangs-Parameter ($P_i$) eines gegenwärtigen Pixels mit einem vorbestimmten Wert verglichen wird, das die Zellenaktivierung mit dem Korrektur-Parameter ($P_C$) gesteuert wird, wenn die Differenz kleiner als der vorbestimmte Wert ist, und dass die Zellenaktivierung mit dem Anfangs-Parameter ($P_i$) gesteuert wird, wenn die Differenz größer als der vorbestimmte Wert ist.

**4.** Verfahren nach einem der vorhergehenden Ansprüche 1 bis 3, **dadurch gekennzeichnet, dass** der vorbestimmte Wert von einer Funktion abgeleitet wird, die von einem Bewegungsvektor eines Pixels abhängt, zu dem der Korrektur-Parameter ($P_C$) und der Anfangs-Parameter ($P_i$) gehören.

**5.** Verfahren nach Anspruch 4, **dadurch gekennzeichnet, dass** die Funktion ferner oder alternativ von der Größe des Anfangs-Parameters ($P_i$) des gegenwärtigen Pixels abhängt.

**6.** Verfahren nach Anspruch 4 oder 5, **dadurch gekennzeichnet, dass** zur Aktivierungs-Steuerung ferner ein Bildschärfe-Verbesserungs-Test durchgeführt wird, bei dem analysiert wird, ob das gegenwärtige Pixel sich in der Nähe eines starken Übergangs oder einer periodischen Struktur in dem Bild befindet.

**7.** Verfahren nach Anspruch 6, **dadurch gekennzeichnet, dass** für den Bildschärfe-Verbesserungs-Test die Differenz zwischen dem Korrektur-Parameter ($P_C$) und dem Anfangs-Parameter ($P_i$) eines gegenwärtigen Pixels mit einem vorbestimmten Wert verglichen wird, dass die Zellenaktivierung mit dem Korrektur-Parameter ($P_C$) gesteuert wird, wenn die Differenz kleiner als der vorbestimmte Wert ist, und dass die Zellenaktivierung mit dem Anfangs-Parameter ($P_i$) gesteuert wird, wenn die Differenz größer als der vorbestimmte Wert ist.

**8.** Verfahren nach Anspruch 7, **dadurch gekennzeichnet, dass** der vorbestimmte Wert von einer Funktion abgeleitet wird, die von der maximalen Differenz zwischen dem Anfangs-Parameter ($P_i$) des gegenwärtigen Pixels und dem Anfangs-Parameter der Pixel abhängt, die auf der Bewegungsvektor-Trajektorie für das gegenwärtige Pixel liegen.

**9.** Verfahren nach Anspruch 8, **dadurch gekennzeichnet, dass** die Funktion ferner von dem Bewegungsvektor des gegenwärtigen Pixels abhängt, zu dem der Korrektur-Parameter ($P_C$) und der Anfangs-Parameter ($P_i$) gehören.

**10.** Verfahren nach Anspruch 8 oder 9, **dadurch gekennzeichnet, dass** die Funktion ferner von der Größe des Anfangs-Parameters ($P_i$) des gegenwärtigen Pixels abhängt.

**11.** Vorrichtung zur Verarbeitung von Videobildern, um falsche Korrektureffekte zu kompensieren, wobei die Videobilder aus Pixeln bestehen, wobei jedes Pixel durch wenigstens eine Zelle eines Anzeigeschirms dargestellt wird, wobei für die Zelle ein gegebener Parameter zum Aktivieren der Zelle vorgeschlagen wird, umfassend:

Einen Vollbildspeicher (2) zur Speicherung des gegebenen Parameters der Zelle, eine Kompensationseinheit (4) für falsche Konturen zum Berechnen eines Korrektur-Parameters für die Zelle, **dadurch gekennzeichnet, dass** die Vorrichtung (5) eine Begrenzungseinheit (5) umfasst, dass die Begrenzungseinheit (5) den Anfangs-Parameter ($P_i$) mit dem Korrektur-Parameter ($P_c$) in der Größe vergleicht und nach einem Wert, der die Differenz zwischen dem Korrektur-Parameter und dem Anfangs-Parameter darstellt, entscheidet, ob die Zelle mit dem Anfangs-Parameter ($P_i$) Zelle mit dem Anfangs-Parameter (Pi) oder dem Korrektur-Parameter ($P_c$) aktiviert wird.

12. Vorrichtung nach Anspruch 11, **dadurch gekennzeichnet, dass** diese einen Bewegungs-Abschätzer (3) aufweist, der die Bewegung eines Pixels bestimmt, wobei die Begrenzungseinheit (5) den Bewegungsvektor zur Entscheidung verwendet, ob der Anfangs- oder der Korrektur-Parameter ($P_c$) verwendet wird.

13. Vorrichtung nach Anspruch 11 oder 12, **dadurch gekennzeichnet, dass** die Begrenzungseinheit eine Differenz zwischen dem Anfangs- und Korrektur-Parameter ($P_c$) berechnet und die Differenz mit einer Funktion vergleicht, die von dem Bewegungsvektor abhängt.

14. Vorrichtung nach einem der Ansprüche 11 bis 13, **dadurch gekennzeichnet, dass** die Begrenzungseinheit (5) eine Differenz zwischen dem Anfangs- und dem Korrektur-Parameter ($P_c$) berechnet und die Differenz mit einer Funktion vergleicht, die von dem Anfangs-Parameter ($P_i$) abhängt.

**Revendications**

1. Procédé pour le traitement d'images vidéo pour la compensation des effets de faux contours, chaque image vidéo étant constituée de pixels, l'image vidéo est affichée sur un écran matriciel, où un pixel est représenté par au moins une cellule de l'écran matriciel, pour une cellule, au moins un paramètre initial ($P_i$), qui est proposé pour contrôler l'activation de la cellule, est fourni, pour la cellule, un paramètre de correction ($P_c$) est déterminé à l'aide d'un procédé de compensation pour une qualité d'image améliorée, **caractérisé en ce que** le paramètre initial ($P_i$) et le paramètre de correction ($P_c$) sont comparés en termes de taille et selon une valeur représentant la différence entre les deux paramètres, il est décidé si l'activation de la cellule est contrôlée au moyen du paramètre de correction ($P_c$) ou du paramètre donné ($P_i$).

2. Procédé selon la revendication 1, **caractérisé en ce que** les paramètres déterminent une période de temps au niveau de laquelle la cellule est allumée pendant une période de trame.

3. Procédé selon la revendication 2, **caractérisé en ce que** la différence entre le paramètre de correction ($P_c$) et le paramètre initial ($P_i$) d'un pixel actuel est comparée à une valeur prédéterminée, l'activation de la cellule est contrôlée au moyen du paramètre de correction ($P_c$) si la différence est inférieure à la valeur prédéterminée et l'activation de la cellule est contrôlée au moyen du paramètre initial ($P_i$) si la différence est supérieure à la valeur prédéterminée.

4. Procédé selon l'une des revendications précédentes 1 à 3, **caractérisé en ce que** la valeur prédéterminée est dérivée d'une fonction qui dépend d'un vecteur de mouvement d'un pixel auquel appartiennent le paramètre de correction ($P_c$) et le paramètre initial ($P_i$).

5. Procédé selon la revendication 4, **caractérisé en ce que** la fonction dépend de façon complémentaire ou alternative de la taille du paramètre initial ($P_i$) du pixel en cours.

6. Procédé selon la revendication 4 ou 5, **caractérisé en ce que** pour le contrôle de l'activation un test d'amélioration de la netteté d'image est en outre réalisé, lequel consiste à analyser si le pixel en cours se trouve à proximité d'une transition importante ou d'une structure périodique de l'image.

**7.** Procédé selon la revendication 6, **caractérisé en ce que** pour le test d'amélioration de la netteté d'image la différence entre le paramètre de correction ($P_c$) et le paramètre initial ($P_i$) d'un pixel actuel est comparée à une valeur prédéterminée,
l'activation de la cellule est contrôlée au moyen du paramètre de correction ($P_c$) si la différence est inférieure à la valeur prédéterminée et
l'activation de la cellule est contrôlée au moyen du paramètre initial ($P_i$) si la différence est supérieure à la valeur prédéterminée.

**8.** Procédé selon la revendication 7, **caractérisé en ce que** la valeur prédéterminée est dérivée d'une fonction de la différence maximale entre le paramètre initial ($P_i$) du pixel actuel et les paramètres initiaux situés sur la trajectoire du vecteur de mouvement pour le pixel actuel.

**9.** Procédé selon la revendication 8, **caractérisé en ce que** la fonction dépend de façon complémentaire du vecteur de mouvement du pixel actuel auquel appartiennent le paramètre de correction ($P_c$) et le paramètre initial ($P_i$).

**10.** Procédé selon la revendication 8 ou 9, **caractérisé en ce que** la fonction dépend de façon complémentaire de la taille du paramètre initial ($P_i$) du pixel actuel.

**11.** Appareil pour le traitement d'images vidéo pour la compensation des effets de faux contours
les images vidéo étant constituées de pixels,
l'image vidéo est affichée sur un écran matriciel,
chaque pixel est représenté par au moins une cellule d'un écran,
pour la cellule, un paramètre donné est proposé pour activer la cellule,
comportant :

  une mémoire d'image (2) pour stocker le paramètre donné de la cellule,
  une unité de compensation de faux contours (4) pour calculer un paramètre de correction pour la cellule,

**caractérisé en ce que**
l'appareil comporte une unité de limitation (5),
l'unité de limitation (5) est adaptée pour comparer le paramètre initial ($P_i$) au paramètre de correction ($P_c$) en termes de taille et pour décider à partir d'une valeur représentant la différence entre le paramètre de correction et le paramètre initial si la cellule sera activée au moyen du paramètre initial ($P_i$) ou du paramètre de correction ($P_c$).

**12.** Appareil selon la revendication 11, **caractérisé en ce que** l'appareil comporte un estimateur de mouvement (3) déterminant le mouvement d'un pixel, où l'unité de limitation (5) est adaptée pour utiliser le vecteur de mouvement afin de déterminer si le paramètre initial ou le paramètre de correction ($P_c$) sera utilisé.

**13.** Appareil selon la revendication 11 ou 12, **caractérisé en ce que**
l'unité de limitation (5) est adaptée pour calculer une différence entre le paramètre initial et le paramètre de correction ($P_c$) et pour comparer la différence avec une fonction dépendant du vecteur de mouvement.

**14.** Appareil selon l'une des revendications 11 à 13, **caractérisé en ce que** l'unité de limitation (5) est adaptée pour calculer une différence entre le paramètre initial et le paramètre de correction ($P_c$) et pour comparer la différence avec une fonction dépendant du paramètre initial ($P_i$).

Fig. 1

1 2 4 8 16 32 64 128

← Frame duration →

← Time →

Fig. 2

1 2 4 8 16 32 32 32 32 32 32 32

Frame period

Fig. 3

15

**Fig. 4**

**Fig. 5**

Fig. 6

Fig. 7

Fig. 8

Fig. 9

Fig. 10

Fig. 11

Fig. 12

**Fig. 13**

**Fig. 14**

**Fig. 15**

$$A_i(x,y)-A_c(x,y) \leq f_{traj}(\|\vec{V}(x,y)\|, A_i(x,y), AmplitudeMAX)$$

$$|A_i(x,y)-A_c(x,y)| \leq f_{loc}(\|\vec{V}(x,y)\|, A_i(x,y))$$

$$|A_i(x,y)-A_c(x,y)| > f_{loc}(\|\vec{V}(x,y)\|, A_i(x,y))$$

$$A_i(x,y)-A_c(x,y) > f_{traj}(\|\vec{V}(x,y)\|, A_i(x,y), AmplitudeMAX)$$

Limitation

**Fig. 16**